# EUROPEAN PATENT APPLICATION

(11) **EP 4 460 125 A1**
(43) Date of publication of application: **06.11.2024**
(21) Application number: 22914755.8
(22) Date of filing: 27.12.2022
(51) Int. Cl.: H04W 72/04

(54) **ELECTRONIC DEVICE AND METHOD FOR WIRELESS COMMUNICATION SYSTEM, AND STORAGE MEDIUM**

(30) Priority: 31.12.2021 CN 202111664876
(71) Applicant: Sony Group Corporation, Tokyo 108-0075 (JP)
(72) Inventor: LI, Haojin, Beijing 100027 (CN); CHEN, Jinhui, Beijing 100101 (CN)
(74) Representative: D Young & Co LLP
(86) International application number: PCT/CN2022/142227
(87) International publication number: WO 2023/125501

(57) **Abstract**

The present invention relates to an electronic device and method for a wireless communication system, and a storage medium. An electronic device for a wireless communication system, comprising: a processing circuit, which is configured to: send first control information to one or more second electronic devices, the first control information at least comprising information indicating a communication range threshold of an electronic device and being used for determining one or more positioning reference signals (PRSs), wherein the one or more PRSs are sent by the electronic device, and is used by the second electronic device to estimate the distance between the electronic device and the second electronic device, and the second electronic device is able to determine, according to a comparison between the communication range threshold and the estimated distance, whether to send a retransmission request to the electronic device in response to unsuccessfully decoding a data packet sent by the electronic device.

## Description

### TECHNICAL FIELD

The present disclosure relates generally to a wireless communication system, and specifically to techniques related to determination of whether to transmit a retransmission request.

### BACKGROUND

Generally, Hybrid Automatic Repeat Request (HARQ) can be used to improve the reliability of data transmission between two wireless communication devices. For example, a receiving end can notify a transmitting end of whether a data packet transmitted by the transmitting end has been successfully received by feeding back HARQ information to the transmitting end. For example, the receiving end can notify the transmitting end that a data packet has been successfully received by transmitting an acknowledgment (ACK) to the transmitting end. For another example, the receiving end can notify the transmitting end of failing to receive a data packet and request the transmitting end to retransmit the data packet by transmitting a negative acknowledgment (NACK) to the transmitting end.

However, in some cases, it may not be possible or necessary to transmit a retransmission request, that is, a NACK. For example, when resources (such as time-frequency resources for transmitting the NACK) are limited, it may not be guaranteed that every receiving end that does not correctly receive a data packet has a resource to transmit the NACK. For another example, in a communication system with a large number of receiving ends, such as broadcast communication or multicast communication for wireless communication, there may be some receiving ends, and whether they can successfully receive data packets has little impact on the overall system performance, so in this case, a retransmission request may not be necessary, and transmitting unnecessary retransmission request(s) may instead interfere with the ability of the transmitting end to correctly determine which receiving ends have not successfully received the data.

In view of this, the transmission of a retransmission request needs to be controlled so that in some cases the retransmission request is not transmitted even if a data packet is not received correctly.

### SUMMARY

The present disclosure proposes a technical solution related to the determination of whether to transmit a retransmission request. Specifically, the present disclosure provides an electronic device and method for a wireless communication system, and a storage medium.

One aspect of the present disclosure relates to an electronic device for a wireless communication system, comprising: a processing circuitry configured to: transmit first control information to one or more second electronic devices, wherein the first control information at least comprises information indicating a communication range threshold of the electronic device and is used for determining one or more Positioning Reference Signals (PRS), wherein the one or more PRSs are transmitted by the electronic device and are used by the second electronic device to estimate a distance between the electronic device and the second electronic device, wherein, the second electronic device is able to determine whether to transmit a retransmission request to the electronic device in response to failing to decode a data packet transmitted by the electronic device, according to a comparison between the communication range threshold and the estimated distance.

Another aspect of the present disclosure relates to a method performed by an electronic device for a wireless communication system, comprising transmitting first control information to one or more second electronic devices, wherein the first control information at least comprises information indicating a communication range threshold of the electronic device and is used for determining one or more Positioning Reference Signals (PRS), wherein the one or more PRSs are transmitted by the electronic device and are used by the second electronic device to estimate a distance between the electronic device and the second electronic device, wherein, the second electronic device is able to determine whether to transmit a retransmission request to the electronic device in response to failing to decode a data packet transmitted by the electronic device, according to a comparison between the communication range threshold and the estimated distance.

Another aspect of the present disclosure relates to an electronic device for a wireless communication system, comprising: a processing circuitry configured to: receive first control information from a first electronic device, wherein the first control information at least comprises information indicating a communication range threshold of the first electronic device, determine one or more positioning reference signals transmitted by the first electronic device based on the first control information, estimate a distance between the first electronic device and the electronic device based on the one or more PRSs, and compare the communication range threshold with the estimated distance, and determine whether to transmit a retransmission request to the first electronic device in response to failing to decode a data packet transmitted by the first electronic device, based on the comparison result.

Another aspect of the present disclosure relates to a method performed by an electronic device for a wireless communication system, comprising receiving first control information from a first electronic device, wherein the first control information at least comprises information indicating a communication range threshold of the first electronic device, determining one or more positioning reference signals transmitted by the first electronic device based on the first control information, estimating a distance between the first electronic device and the electronic device based on the one or more PRSs, and comparing the communication range threshold with the estimated distance, and determining whether to transmit a retransmission request to the first electronic device in response to failing to decode a data packet transmitted by the first electronic device, based on the comparison result.

Another aspect of the present disclosure relates to a non-transitory computer-readable storage medium having executable instructions stored thereon, which, when executed, implement the methods as described in the above aspects.

Another aspect of the present disclosure relates to a device. The device comprises: a processor and a storage apparatus having executable instructions stored thereon, which, when executed, implement the methods as described above.

The above summary is provided to summarize some exemplary embodiments in order to provide a basic understanding to various aspects of the subject matter described herein. Therefore, above features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF THE DRAWINGS

A better understanding of the present disclosure can be obtained when the following detailed description of embodiments is considered in conjunction with the accompanying drawings. The same or similar reference numbers are used throughout various drawings to denote the same or similar components. The accompanying drawings, along with the following detailed description, are incorporated in and constitute a part of this specification, to illustrate embodiments of the disclosure and to explain the principles and advantages of the disclosure. Wherein:
FIG. 1 schematically illustrates a communication scenario according to an embodiment of the present disclosure;
FIG. 2 schematically illustrates an example of inappropriate determination of whether to transmit a retransmission request;
FIG. 3 schematically illustrates a conceptual configuration of an electronic device at a transmitting end according to an embodiment of the present disclosure;
FIG. 4A schematically illustrates a first format of first control information according to an embodiment of the present disclosure;
FIG. 4B schematically illustrates a second format of first control information according to an embodiment of the present disclosure;
FIG. 5 schematically illustrates a time window in which a positioning reference signal that may be used when estimating a distance between a transmitting end and a receiving end may be located according to an embodiment of the present disclosure;
FIG. 6 schematically illustrates a conceptual operation flow of an electronic device at a transmitting end according to an embodiment of the present disclosure;
FIG. 7 schematically illustrates a conceptual configuration of an electronic device at a receiving end according to an embodiment of the present disclosure;
FIG. 8 schematically illustrates a conceptual operation flow of an electronic device at a receiving end according to an embodiment of the present disclosure;
FIG. 9 schematically illustrates an exemplary interaction between a transmitting end and a receiving end according to an embodiment of the present disclosure;
FIG. 10 is a block diagram of an example structure of a personal computer as an information processing device that can be employed in an embodiment of the present disclosure;
FIG. 11 is a block diagram illustrating a first example of a schematic configuration of a gNB to which the technology of the present disclosure can be applied;
FIG. 12 is a block diagram illustrating a second example of a schematic configuration of a gNB to which the technology of the present disclosure can be applied;
FIG. 13 is a block diagram illustrating an example of a schematic configuration of a smart phone to which the technology of the present disclosure can be applied; and
FIG. 14 is a block diagram illustrating an example of a schematic configuration of a car navigation device to which the technology of the present disclosure can be applied.

While the embodiments described in this disclosure may be susceptible to various modifications and alternatives, specific embodiments thereof are illustrated by way of example in the accompanying drawings and are described in detail herein. It should be understood, however, that the drawings and detailed description thereof are not intended to limit the embodiments to the particular forms disclosed; rather, it is intended to cover all modifications, equivalents and alternative falling within the spirit and scope of the claims.

### DETAILED DESCRIPTION

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

Typically, a wireless communication system includes at least a transmitting end device and a receiving end device. The transmitting end device and the receiving end device may be one of a control device (e.g., base station control) or a terminal device. In particular, both the transmitting end device and the receiving end device may be terminal devices.

In this disclosure, the term "base station" or "control device" has the full breadth of its ordinary meaning and includes at least a wireless communication station that is a part of a wireless communication system or radio system to facilitate communication. As an example, a base station may be an eNB of the 4G communication standard, a gNB of the 5G communication standard, a remote radio head, a wireless access point, a drone control tower, or a communication apparatus performing similar functions. In this disclosure, "base station" and "control device" may be used interchangeably, or "control device" may be implemented as a part of "base station". Application examples of the base station/terminal device will be described in detail below by taking the base station as an example in conjunction with the accompanying drawings.

In this disclosure, the term "terminal device" or "user equipment (UE)" has the full breadth of its ordinary meaning and includes at least a terminal device that is a part of a wireless communication system or radio system to facilitate communication. As an example, a terminal device may be, for example, a mobile phone, a laptop, a tablet, a vehicle-mounted communication device, a wearable device, a sensor, or the like, or a component thereof. In this disclosure, "terminal device" and "user equipment" (hereinafter may be simply referred to as "UE") may be used interchangeably, or "terminal device" may be implemented as a part of "user equipment".

In this disclosure, the term "transmitting end" has the full breadth of its ordinary meaning, and generally indicates the side that transmits data in a communication system, which may be the control device/base station side or the terminal device/UE side. Similarly, the term "receiving end" has the full breadth of its ordinary meaning, and may accordingly indicate the side that receives data in a communication system, which may be the terminal device/UE side or the control device/base station side. Hereinafter, examples are given in which both a transmitting end and a receiving end are terminal devices, but this should not be understood as a limitation to the present disclosure. Furthermore, in the present disclosure, the same device may also serve as both a transmitting end and a receiving end.

As introduced in the background, HARQ can be used to improve the reliability of data transmission between two wireless communication devices. However, in some cases, it may not be possible or necessary to transmit a retransmission request, that is, a NACK.

For example, in sidelink communication, HARQ has been introduced. In particular, in sidelink multicast communication, since there are multiple receiving end devices for the same message, if each receiving end device performs HARQ feedback, there might be too much transmission of HARQ feedback messages, so that it is difficult for a transmitting end device to identify which receiving end device did not receive the message. In addition, resources for HARQ feedback may be limited, and therefore, it may not be possible for every receiving end device to perform HARQ feedback. In considering of these problems, it has been proposed to divide a certain range for communication. Receiving end devices within this range need to transmit NACK to request retransmission if data is not successfully received, thereby ensuring reliable communication within the communication range. While receiving end devices within this range will not perform feedback even if data is successfully received.

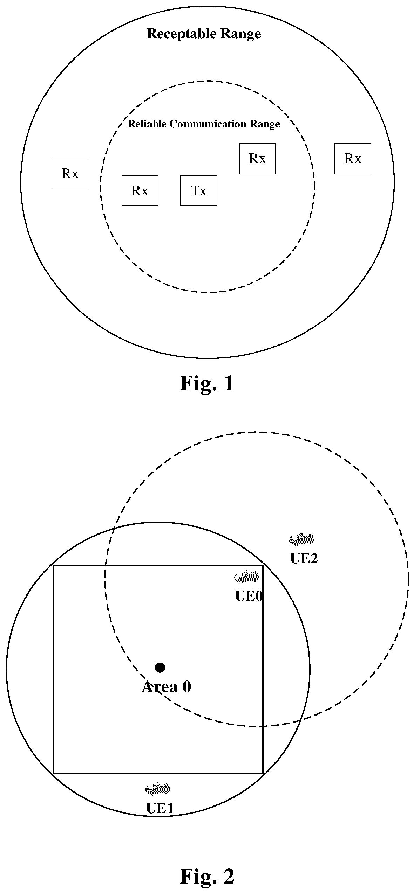

FIG. 1 illustrates a communication scenario in which a reliable communication range is divided according to an embodiment of the present disclosure. As shown in FIG. 1, data transmitted by a transmitting end device Tx may be received by any receiving end device within the solid circle (for example, the four receiving end devices Rx as shown, but also more receiving end devices may be present). However, the reliability of communication is ensured only within the reliable communication range shown by the dashed circle. That is to say, when data transmitted by the transmitting end device Tx is not successfully received, only receiving end devices within the reliable communication range (for example, the two receiving end devices Rx shown, but there may be more receiving end devices) can request retransmission of the data by transmitting NACK feedback, while receiving end devices Rx, which are within the receptable range but outside the reliable communication range, do not give feedback even if they do not successfully receive the data transmitted by the transmitting end device Tx. In this way, the number of receiving end devices transmitting NACKs can be reduced, thereby improving the overall efficiency of a communication system and improving the reliability of data reception by receiving end devices within the reliable communication range.

In a communication system that has been divided a reliable communication range, a receiving end device needs to estimate a distance between it and a transmitting end device to determine whether it is within the reliable communication range, and then determine whether it can transmit the NACK.

A method of determining the distance between a receiving end device and a transmitting end device based on a zone identifier (zone ID) has been proposed. According to this method, the transmitting end device transmits its own zone ID and a reliable communication range (for example, minimum required communication range) to the receiving end device, and the receiving end device calculates the distance between it and the center of the area where the transmitting end device is located, as an estimated value of the communication distance between the transmitting end device and the receiving end device. If the estimated value of the communication distance is greater than the minimum required communication range, the receiving end device determines that it is not within the reliable communication range and cannot transmit a retransmission request (i.e., NACK) to the transmitting end device; if the estimated communication distance is less than or equal to the minimum required communication range, the receiving end device determines that it is within the reliable communication range and can transmit a retransmission request to the transmitting end device.

However, the present disclosure notices that this method of estimating distance may cause a receiving end device to make wrong/missed determination of whether it is within a reliable communication range. FIG. 2 illustrates an example of such wrong /missed determination.

In the scenario shown in FIG. 2, a transmitting end device is UE 0, and receiving end devices are UE1 and UE2. As shown in FIG. 2, the transmitting end device is in a rectangular area with zone ID 0 and is in the upper right corner of the area. The dashed circle centered on UE 0 in FIG. 2 shows an actual reliable communication range of UE 0. As it can be seen, UE 1 is outside the actual reliable communication range of UE 0, while UE 2 is within the actual reliable communication range of UE 0. However, according to the method of estimating distance based on zone ID described above, since the distance between the receiving end device and the center of the area where the transmitting end device is located is used as an estimated value of the communication distance between the transmitting end device and the receiving end device, only receiving end devices within the solid circle in FIG. 2 can transmit an NACK to the transmitting end device. With this determination method, since the distance between UE 1 and the center of area 0 is less than the minimum required communication range of the transmission of UE 0, UE 1 will erroneously determine that it is within the reliable communication range of UE 0, causing UE 1 to probably transmit the NACK erroneously; while because the distance between UE 2 and the center of area 0 is greater than the minimum required communication range of the transmission of UE 0, UE 2 will erroneously determine that it is outside the reliable communication range of UE 0, causing UE 2 to probably miss to transmit NACK.

In view of the above, the present disclosure proposes a solution to more accurately estimate the distance between a transmitting end device and a receiving end device, thereby more accurately determining whether a retransmission request can be transmitted.

According to an embodiment of the present disclosure, instead of zone ID, a Positioning Reference Signal (PRS) may be used to estimate the distance between a receiving end device and a transmitting end device. For example, a transmitting end device may transmit to a receiving end device control information indicating information about a communication range threshold between the transmitting end device and the receiving end device; the receiving end device may determine one or more PRSs transmitted by the transmitting end device based on the control information, and estimate a distance between the transmitting end device and the receiving end device based on the one or more PRSs; and, the receiving end device may determine whether to transmit a retransmission request to the transmitting end device in response to failing to decode a data packet transmitted by the transmitting end device, according to a comparison between the communication range threshold and the estimated distance.

The solution of the present disclosure is particularly suitable for sidelink multicast communication. Hereinafter, the solution of the present disclosure will be explained by taking sidelink multicast communication (in which both a transmitting end and a receiving end are terminal devices) as an example. However, the present disclosure is not limited to the sidelink multicast communication, but can be applied to any multicast/broadcast communication scenario where it is necessary to determine whether to transmit a retransmission request based on distance.

### The structure and operation flow of a transmitting end device according to an embodiment of the present disclosure

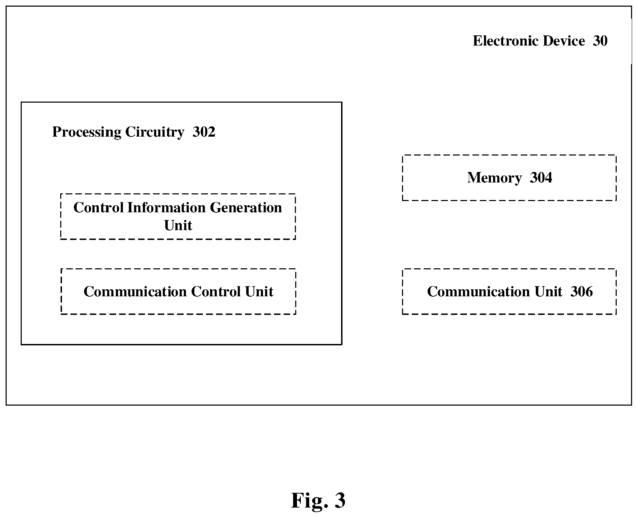

A conceptual structure for an electronic device 30 at a transmitting end according to an embodiment of the present disclosure will be explained first with reference to FIG. 3.

As shown in FIG. 3, electronic device 30 may include processing circuitry 302. The processing circuitry 302 may be configured to transmit (e.g., via communication unit 306) first control information to one or more second electronic devices, wherein the first control information at least comprises information indicating a communication range threshold of the electronic device 30 and is used for determining one or more PRSs, wherein the one or more PRSs are transmitted by the electronic device 30 and are used by the second electronic device to estimate a distance between the electronic device 30 and the second electronic device, wherein, the second electronic device is able to determine whether to transmit a retransmission request to the electronic device 30 in response to failing to decode a data packet transmitted by the electronic device 30, according to a comparison between the communication range threshold and the estimated distance.

The processing circuitry 302 may be in a form of a general-purpose processor or a special-purpose processing circuit, such as an ASIC. For example, the processing circuitry 302 can be constructed from a circuit (hardware) or a central processing device (such as a Central Processing Unit (CPU)). In addition, the processing circuitry 302 may carry a program (software) for operating the circuit (hardware) or central processing device. The program can be stored in a memory (such as arranged in the memory 304) or an external storage medium connected from the outside, and downloaded via a network (such as the Internet).

In one implementation, the processing circuitry 302 may include a control information generation unit. The control information generating unit may generate control information (hereinafter referred to as first control information) including at least information indicating a communication range threshold of the electronic device 30 as a transmitting end. The control information generating unit may generate the first control information in a manner such that the control information can be used by a receiving end device to determine one or more PRSs to be used to estimate a distance between the transmitting end device and the receiving end device. In addition, the control information generating unit may also generate other control information, for example, second control information indicating a format of the first control information.

In one implementation, the processing circuitry 302 may also include a communications control unit that controls communications with receiving end devices and/or base stations (optionally via communications unit 306). The communication control unit may, for example, control transmitting control information generated by the control information generating unit, PRS, and data packets to the receiving end devices, and control receiving retransmission requests from the receiving end devices, and the like.

Optionally, the electronic device 30 may also include a memory 304 and a communication unit 306 shown in dashed lines in the figure. In addition, the electronic device 30 may also include other components not shown, such as a radio frequency link, a baseband processing unit, a network interface, a processor, a controller, and the like. The processing circuitry 302 may be associated with the memory 304 and/or the communication unit 306. For example, the processing circuitry 302 may be connected to the memory 304 directly or indirectly (for example, other components may be connected in between) to access data. For a further example, the processing circuitry 302 may be connected directly or indirectly to the communication unit 306 to transmit radio signals via the communication unit 306 and to receive radio signals via the communication unit 306.

The memory 304 may store various information to be used by the processing circuitry 302 or generated by the processor 302 (e.g., a communication range threshold, information related to a time-frequency resource and/or a sequence of the PRS as will be described in detail below, information related to a first time window and/or a second time window, and information for determining a communication range threshold, etc.), programs and data for operations of the electronic device 30, data to be transmitted by the communication unit 306, etc. The memory 304 is drawn with dashed lines as it may also be located within the processing circuitry 302 or external to the electronic device 30. The memory 304 may be a volatile memory and/or a non-volatile memory. For example, the memory 304 may include, but is not limited to, a random-access memory (RAM), a dynamic random-access memory (DRAM), a static random-access memory (SRAM), a read only memory (ROM), and a flash memory.

The communication unit 306 may be configured to communicate with a receiving end device and/or a base station under the control of the processing circuitry 302 (e.g., a communication control unit). In one example, the communication unit 306 may be implemented as a transmitter or a transceiver, including communication components such as an antenna array and /or a radio frequency link.

Although the processing circuitry 302 is shown as being separate from the communication unit 306 in FIG. 3, the processing circuitry 302 may also be implemented to include the communication unit 306, for example, in combination with a communication control unit. Additionally, the processing circuitry 302 may also be implemented to include one or more other components in the electronic device 30, or the processing circuitry 302 may be implemented as the electronic device 30 itself. In an actual implementation, the processing circuitry 302 may be implemented as a chip (such as an integrated circuit module including a single wafer), a hardware component, or a complete product.

It should be noted that the above units are only logical modules divided according to specific functions they implement, and are not used to limit specific implementations, for example, they can be implemented in software, hardware, or a combination of software and hardware. In practical implementations, each of the above units may be implemented as an independent physical entity, or may also be implemented by a single entity (for example, a processor (CPU or DSP, etc.), integrated circuit, etc.). In addition, each of the above units is shown with dashed lines in the drawings to indicate that these units may not actually exist, and the operations/functions they realized may be realized by the processing circuitry itself.

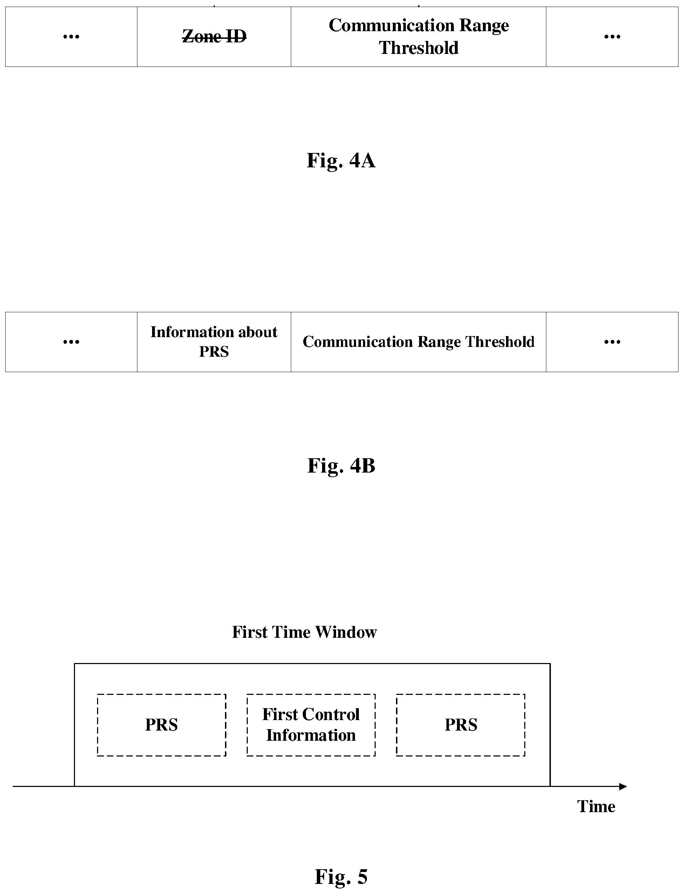

Various operations implemented by the electronic device 30 will be described below with reference to FIGS. 4A-4B and FIG. 5.

As briefly introduced above, the electronic device 30 as a transmitting end may transmit first control information to a receiving end device. The first control information may include information indicating a communication range threshold of the electronic device 30 and may be used by the receiving end device to determine one or more PRS, which will be used by the receiving end device to estimate a distance between the electronic device 30 and the receiving end device.

FIGS. 4A-4B illustrate two alternative formats of first control information according to the present disclosure.

According to the present disclosure, since the distance between a transmitting end and a receiving end is determined based on one or more PRSs, the electronic device 30 as the transmitting end no longer needs to notify the receiving end device of its zone ID. Therefore, as shown in FIGS. 4A and 4B, first control information in any format according to the present disclosure does not include information indicating zone ID.

In addition, similar to the existing method introduced above, the first control information according to the present disclosure further comprises information indicating a communication range threshold of a transmitting end. For example, the communication range threshold may represent a requirement for a communication range of a transmitting end (e.g., indicating a reliable communication range). When a receiving end device estimates that the distance between it and a transmitting end device is within the communication range threshold, the receiving end device needs to transmit a retransmission request to the transmitting end device in response to failing to decode a data packet transmitted by the transmitting end device.

According to one embodiment, the electronic device 30 as a transmitting end may receive a communication range threshold from a base station. For example, the base station may predetermine the communication range threshold and notify the electronic device 30 of the communication range threshold using a Radio Resource Control (RRC) signaling.

According to one embodiment, instead of receiving a communication range threshold from a base station, the electronic device 30 as a transmitting end may dynamically determine the communication range threshold by itself. In particular, the electronic device 30 may dynamically determine the communication range threshold based on one or more of: a moving speed of the electronic device 30 as a transmitting end, a number of receiving end devices, and a quantity of time-frequency resources being able to be used by a receiving end device to transmit a retransmission request.

Specifically, the higher the moving speed of the electronic device 30 as a transmitting end, the smaller the value of the communication range threshold can be determined to be; the greater the number of receiving end devices, the smaller the value of the communication range threshold can be determined to be; and the more the time-frequency resources being able to be used by receiving end device(s) to transmit a retransmission request, the larger the value of the communication range threshold can be determined to be. The electronic device 30 as a transmitting end may consider the above factors comprehensively and dynamically determine the communication range threshold as the most appropriate value for the current communication over time. For example, the most appropriate communication range threshold may make resources used to transmit NACK(s) within a reliable communication range determined by a communication range threshold substantially equal to or slightly smaller than the resources in a communication system that can be used by a receiving end device (s) to transmit retransmission request(s). That is, the most appropriate communication range threshold may be determined such that it is able to provide a maximum reliable communication range that a communication system can currently satisfy.

According to the present disclosure, a receiving end device may determine, based on first control information transmitted by the electronic device 30 as a transmitting end device, one or more PRSs to be used to estimate a distance from the transmitting end device. In the present disclosure, determining one or more PRSs to be used to estimate a distance between a transmitting end and a receiving end (hereinafter referred to as PRS for distance estimation) includes: on the one hand, determining a time-frequency resource and/or a sequence of one or more PRSs, and optionally on the other hand, determining which subframe's PRS(s) or subframes' PRS(s) are used to estimate the distance.

In a case that the first control information adopts a format as shown in FIG. 4A, the first control information may not explicitly include information on a time-frequency resource and/or a sequence of PRS for distance estimation. In this case, according to predetermined rules (for example, specified by a base station or specified by a communication standard used), the first control information may implicitly indicate what time-frequency resource and/or sequence are used by the PRS for distance estimation. For example, after a receiving end device receiving first control information in a format shown in FIG. 4A, the receiving end device can determine time resources (for example, which symbols does the PRS occupy in a subframe) and frequency resources (for example, which subcarrier or subcarriers) occupied by the PRS for distance estimation based on the above predetermined rules. In particular, the above predetermined rules may indicate mapping relationship between the time-frequency resource of the PRS and the subframe number where the first control information is located. The receiving end device may determine the time resource and frequency resource occupied by the PRS for distance estimation according to the subframe number of the first control information. Similarly, the above predetermined rules can also indicate the mapping relationship between the sequence of the PRS and the subframe number where the first control information is located. The receiving end device may also determine the sequence used by the PRS for distance estimation according to the subframe number of the first control information. For example, such a sequence may be a Gold sequence or a Zadoff-Chu sequence.

According to the present disclosure, the first control information may also adopt a format as shown in FIG. 4B. As shown in FIG. 4B, the first control information in this format may explicitly include information used to determine a time-frequency resource and/or a sequence of PRS for distance estimation. For example, this information may include information indicating which sequence is adopted by the PRS and/or which ResourceElement(s) (RE) is/are occupied.

According to the present disclosure, the first control information may be dynamically transmitted at any time when needed, for example, aperiodically (for example, when a receiving end needs to determine PRS(s) to estimate distance). Alternatively, the first control information may also be transmitted periodically.

In some communication scenarios of the present disclosure (for example, vehicle-to-external communication V2X), since a transmitting end and/or a receiving end may move rapidly during communication, there may be a problem that the previous PRS cannot reflect current distance between the transmitting end and the receiving end, that is, the previous PRS is out of date. Therefore, it is necessary to determine which subframe's PRS(s) or subframes' PRS(s) can be used to estimate the distance.

According to one embodiment, first control information may also be used, for example, by a receiving end device to determine a first time window, and only one or more PRSs within the first time window may be used to estimate the distance between a transmitting end and the receiving end.

FIG. 5 illustrates a time range that a first time window can cover. As shown in FIG. 5, the first time window may represent any period of time from some subframe before the subframe where the first control information is located to some subframe after the subframe where the first control information is located. In other words, the first time window may include the subframe where the first control information is located and /or one or more subframes before the first control information and/or one or more subframes after the first control information. According to the present disclosure, based on first control information transmitted by a transmitting end device, a receiving end device may determine within which time period (in other words, within which frames) the PRSs transmitted can be used to estimate the distance. The receiving end device can decide whether to use all PRSs in the first time window to estimate the distance or select some of the PRSs in the first time window to estimate decide distance depending on the situation (for example, the reception situation of the PRS(s), its own computing capability, etc.). Advantageously, using multiple PRSs jointly to estimate the distance can improve the accuracy of distance estimation.

According to the present disclosure, a first time window may be determined based on first control information in any suitable manner.

According to one embodiment, a starting position of a first time window may be determined by a subframe number of the subframe where first control information is located. For example, the subframe where the first control information is located may be used as a starting subframe of the first time window (i.e., the starting position of the first time window) by default. For another example, the K-th subframe forward or backward from the subframe where the first control information is located may also be used as the starting position of the first time window by default, K being an integer greater than 0. For another example, the first control information may include one or more fields indicating the starting position of the first time window. Such field(s) may include a field indicating whether the starting subframe of the first time window is located before or after the subframe where the first control information is located and/or a field indicating which subframe the starting subframe of the first time window is forward/backward from the subframe where the first control information is located.

According to the present disclosure, a length a first time window (e.g., the number of continuous subframes) may be determined in any suitable manner. For example, first control information may include a field indicating the length of the first time window. Alternatively, the length of the first time window may be indicated by a base station via an RRC signaling. Or alternatively, the length of the first time window may be specified in advance, that is, by default.

It can be understood that the method for determining a first time window is not limited to the above methods, and any appropriate method can be used to determine the first time window. For example, the first control information may directly indicate one or several subframes (for example, by indicating subframe numbers) as the first time window. Furthermore, a first time window may be determined by any combination of the above methods of determining a starting position and a length of a first time window. For example, one of the starting position of the first time window and the length of the first time window may be default, while the other may be indicated/determined according to one of the methods described above, and "default" here can mean that a transmitting end and a receiving end have agreed in advance or is specified in a communication standard used by the transmitting end and the receiving end. In a case that first control information includes information regarding a starting position/a length of a first time window, such information may be included in reserved fields as shown by ellipses in FIGS. 4A, 4B. In addition, in applicable scenarios, the first time window may not be divided, instead, any one or more PRSs may be used to estimate distance.

According to the present disclosure, the electronic device 30 as a transmitting end may transmit first control information to a receiving end device each time a data packet is transmitted (for example, the first control information is transmitted immediately before or after transmitting of the data packet), so that the receiving end device determines whether a retransmission request can be transmitted for reception failure of the data packet based on the received first control information and one or more PRSs. Here, the data packet transmitted "each time" may be a single data packet, or may be multiple data packets constituting a data block in a case that the retransmission request is transmitted in blocks.

Alternatively, a second time window may also be set to specify the time during which the distance estimated by the receiving end device based on the first control information remains valid, that is, the time during which the determination by the receiving end device of whether it can transmit a retransmission request for one or more data packets failing to be decoded remains valid.

For example, the electronic device 30 as a transmitting end may also indicate to a receiving end device to enable a second time window through first control information, such that the receiving end device can determines whether to transmit, in response to failing to decode one or more data packets transmitted by the electronic device 30 within the second time window, one or more corresponding retransmission requests to the electronic device 30, according to a comparison between a communication range threshold indicated by the first control information and a distance estimated by PRS for distance estimation determined based on using the first control information. If the receiving end determines that it can transmit a retransmission request based on the first control information, the receiving end can transmit a retransmission request to the transmitting end for any data packet failing to be decoded , during the second time window notified to be enabled by the first control information.

It should be noted that the second time window may include a subframe where first control information is located and /or one or more subframes before the first control information and/or one or more subframes after the first control information. In particular, the second time window does not necessarily have to be a period of time after the first control information being received. The second time window may start before the first control information, and in a case that it is determined that a retransmission request can be transmitted based on the first control information, a receiving end device may transmit a retransmission request(s) for data packet(s) that failed to be decoded before receiving the first control information.

According to the present disclosure, the position and/or length of the second time window may be indicated/determined in any suitable manner. For example, the position and/or length of the second time window may be determined based on the first time window. For example, the relationship between the starting position of the second time window and the starting position of the first time window and the length of the second time window may be specified in advance or indicated through control information (e.g., first control information). For example, the starting position of the second time window may be one of: the subframe starting of the first time window, the M-th subframe forward from the subframe starting of the first time window, or the N-th subframe backward from the subframe starting of the first time window, wherein, both M and N are integers greater than or equal to 1. For example, the length of the second time window may be equal to that of the first time window, or may be an integer multiple (in particular, twice) of the length of the first time window.

Alternatively, the position and/or length of the second time window may also be indicated by the first control information. For example, the first control information may indicate the starting position and/or length of the second time window in a way similar to indicate the starting position and/or length of the first time window. For example, the first control information may indicate that several subframes starting from a certain subframe (for example, the subframe where the first control information is located or the starting subframe of the first time window) will be used as the second time window, or may directly indicate one or several subframes as the second time window.

Alternatively, the position and/or length of the second time window is specified in advance, for example, specified in a communication standard used by a transmitting end and a receiving end.

It can be understood that the method for determining a second time window is not limited to the above methods, and any appropriate method can be used to determine the second time window. Furthermore, the second time window may be determined according to any combination of the above methods for determining the starting position and length of the second time window.

It should be noted that the above "indicate to enable a second time window through first control information" refers to enabling in a broad sense. For example, the first control information only includes one or more bits to notify a receiving end device to enable the second time window specified in a standard. Alternatively, in a case that the first control information has notified a receiving end device of information indicating a position and/or length of the second time window, the first control information may implicitly indicate that the second time window is to be enabled without necessarily containing specific bit(s) indicating whether the second time window is to be enabled. In addition, a second time window with a default starting position and length may also be enabled by default. In this case, the first control information may not include information related to the second time window, and after receiving the first control information, a receiving end device keeps, within a predetermined period of time (i.e., the default second time window), the determination made based on the first control information on whether a retransmission request can be transmitted for one or more data packets failing to be decoded remain valid.

The first control information according to the present disclosure has been described above with reference to FIGS. 4A and 4B. According to the present disclosure, the first control information may be dedicated information configured specifically in a format as shown in FIGS. 4A and 4B, or any appropriate control information existing in the art may be reused, as long as the control information is configured in a format disclosed in this specification. For example, in sidelink communication, a Sidelink Control Indicator (SCI) can be used as the first control information.

Since the solution of the present disclosure may reuse existing control information and the reused control information may have multiple formats with different control roles, and in addition, the first control information itself may also have two alternative formats, therefore, before transmitting the first control information, it may be necessary to transmit another control information (hereinafter referred to as second control information) to a receiving end device to notify the receiving end device of the format of the first control information. In particular, the second control information and the first control information may be the same existing control information in different formats. For example, both the first control information and the second control information may be SCI, and the second control information may be regarded as a first-level SCI and the first control information may be regarded as a second-level SCI, and transmitting periods for the first-level SCI and the second-level SCI may vary.

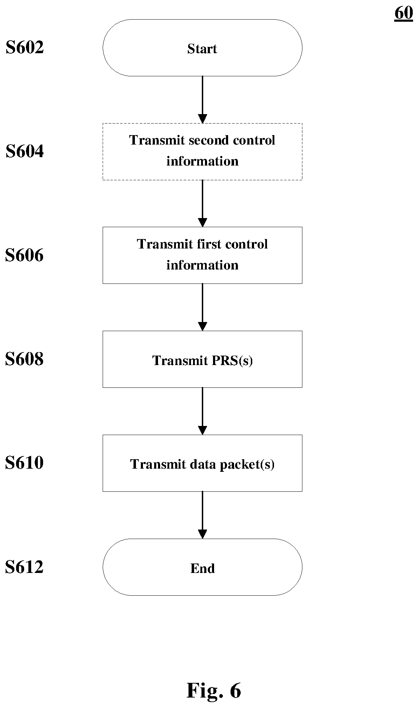

Various operations of the electronic device 30 at the transmitting end have been described in detail with reference to the drawings. Next, a conceptual operation flow 60 of the electronic device 30 as a transmitting end will be described with reference to FIG. 6.

The operation of the electronic device 30 as a transmitting end starts with S602.

At S606, the electronic device 30 as a transmitting end may transmit first control information to one or more receiving end devices. For example, one or more receiving end devices here may be a group of receiving end devices for multicast communication. As described in detail above, the first control information includes at least information indicating a communication range threshold of the electronic device 30 and is used for determining one or more PRSs.

At S608, the electronic device 30 as a transmitting end may transmit one or more PRSs to one or more receiving end devices. As described in detail above, the PRSs can be used by the receiving end device to estimate a distance between the electronic device 30 as a transmitting end and the receiving end device.

At S610, the electronic device 30 as a transmitting end may transmit one or more data packets to one or more receiving end devices. As described in detail above, the receiving end device may determine whether to transmit, in response to failing to decode of a data packet, a retransmission request to the electronic device 30 as a transmitting end, according to a comparison between the received communication range threshold and the estimated distance.

The conceptual operation flow of the electronic device 30 as a transmitting end ends at S612.

It should be noted that the operation steps of the electronic device 30 as a transmitting end shown in FIG. 6 are only illustrative. In practice, operations of a transmitting end may also include some additional or alternative steps. For example, as shown in S604 in the dashed box, optionally, before transmitting the first control information, the transmitting end may also transmit second control information to the receiving end device to indicate a format of the first control information to be transmitted next. In addition, before transmitting the first control information, the transmitting end may also dynamically determine a communication range threshold.

In addition, the execution order of each operation shown in FIG. 6 is only illustrative. For example, the transmitting end may transmit PRS(s) at any appropriate moment, and the receiving end may select a suitable one or more PRSs for calculating the distance according to the first time window explained above. Furthermore, data packets are not necessarily transmitted in the order shown in FIG. 6. For example, a data packet may be transmitted before the first control information, or may be transmitted between transmission of the first control information and transmission of the PRS(s).

### Structure and operation flow of a receiving end device according to an embodiment of the present disclosure

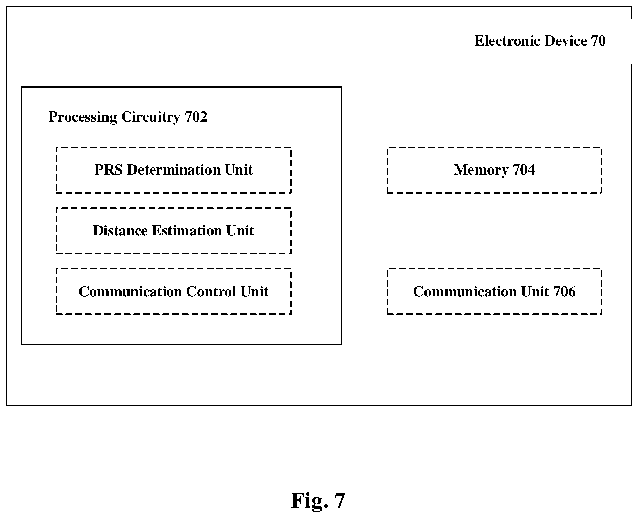

An exemplary structure and exemplary operations of a transmitting end device according to the present disclosure are described in detail above. Next, an exemplary structure and an exemplary operation flow of a receiving end device according to the present disclosure will be described with reference to FIGS. 7-8.

First, a conceptual structure for an electronic device 70 of a receiving end according to an embodiment of the present disclosure will be described with reference to FIG. 7.

As shown in FIG. 7, the electronic device 70 may include processing circuitry 702. The processing circuitry 702 may be configured to control to receive first control information from a transmitting end device, wherein the first control information at least comprises information indicating a communication range threshold of the transmitting end device; determine one or more PRSs transmitted by the transmitting end device based on the first control information; estimate a distance between the transmitting end device and the electronic device 70 as a receiving end based on the one or more PRSs; and compare the communication range threshold with the estimated distance, and determine whether to transmit a retransmission request to the transmitting end device in response to failing to decode a data packet transmitted by the transmitting end device, based on the comparison result. The first control information may have a format detailed above, and may further indicate information such as a video resource, a first time window and/or a second time window of the first control information as explained above, which will not be repeated in detail here.

The processing circuitry 702 may be in a form of a general-purpose processor or a special-purpose processing circuit, such as an ASIC. For example, the processing circuitry 702 can be constructed from a circuit (hardware) or a central processing device (such as a Central Processing Unit (CPU)). In addition, the processing circuitry 702 may carry a program (software) for operating the circuit (hardware) or central processing device. The program can be stored in a memory (such as arranged in the memory 704) or an external storage medium connected from the outside, and downloaded via a network (such as the Internet).

The processing circuitry 702 may include a PRS determination unit. For example, the PRS determining unit may determine one or more PRSs to be used for estimating the distance to a transmitting end device based on first control information. For example, the PRS determination unit may determine a time-frequency resource and/or a sequence of one or more PRSs to be used for estimating the distance to a transmitting end device based on first control information (for example, its subframe number or information about the PRS(s) for distance estimation included in it). For example, the PRS determining unit may also determine a first time window based on first control information (for example, its subframe number or information about the first time window included in it), thereby determining which subframe's PRS(s) or subframes' PRS(s) are used to estimate the distance. In addition, the PRS determining unit may also determine which PRS(s) within the first time window is to be used for estimating distance, for example based on the reception situation of the PRS(s), the computing capability of the electronic device 70, etc. How to determine PRS(s) for distance estimation has been described in detail above, which will not be repeated here.

The processing circuitry 702 may also include a distance estimation unit. For example, the distance estimation unit may calculate path loss according to the difference between the determined transmitting power of the PRS for distance estimation distance and the received receiving power of the PRS for distance estimation, and then calculate the distance between the transmitting end and the receiving end base on the power difference and a path loss model. The distance can be estimated based on the difference in transmitting and receiving power of the PRS using any appropriate method known in the art, which will not be described further here.

The processing circuitry 702 may also include a communication control unit that controls communication with a transmitting end device and/or a base station (optionally via the communication unit 706). The communication control unit may, for example, control to receive control information (especially first control information), PRS, data packets from the transmitting end device, and control to transmit a retransmission request to the transmitting end device, and so on. In particular, in response to the distance estimated by the distance estimation unit being less than or equal to a communication range threshold and a data packet transmitted by the transmitting end device failing to be decoded, the communication control unit may control to transmit a retransmission request to the transmitting end device, and in response to the distance estimated by the distance estimation unit being greater than the communication range threshold and a data packet transmitted by the transmitting end device failing to be decoded, the communication control unit may control not to transmit a retransmission request to the transmitting end device.

In addition, optionally, the electronic device 70 may also include a memory 704 and a communication unit 706 shown in dashed lines in the figure. In addition, the electronic device 70 may also include other components not shown, such as a radio frequency link, a baseband processing unit, a network interface, a processor, a controller, and the like. The processing circuitry 702 may be associated with the memory 704 and/or the communication unit 706. For example, the processing circuitry 702 may be connected to the memory 704 directly or indirectly (for example, other components may be connected in between) to access data. For further example, the processing circuitry 702 may be connected directly or indirectly to the communication unit 706 to transmit radio signals via the communication unit 706 and to receive radio signals via the communication unit 706.

The memory 704 may store various information used by or generated by the processing circuitry 702 (e.g., a communication range threshold, an estimated distance between a transmitting end and a receiving end, information related to a time-frequency resource and/or a sequence of the PRS, and information related to a first time window and/or a second time window, etc.), programs and data for operations of the electronic device 70, data to be transmitted by the communication unit 706, etc. The memory 704 is drawn with dashed lines as it may also be located within the processing circuitry 702 or external to the electronic device 70. The memory 704 may be a volatile memory and/or a non-volatile memory. For example, the memory 704 may include, but is not limited to, a random-access memory (RAM), a dynamic random-access memory (DRAM), a static random-access memory (SRAM), a read only memory (ROM), and a flash memory.

The communication unit 706 may be configured to communicate with a base station under the control of the processing circuitry 702 (e.g., a communication control unit). In one example, the communication unit 706 may be implemented as a transmitter or transceiver, including communication components such as an antenna array and/or a radio frequency link.

Although the processing circuitry 702 is shown as being separate from the communication unit 706 in FIG. 7, the processing circuitry 702 may also be implemented to include the communication unit 706. Additionally, the processing circuitry 702 may also be implemented to include one or more other components in the electronic device 70, or the processing circuitry 702 may be implemented as the electronic device 70 itself. In an actual implementation, the processing circuitry 702 may be implemented as a chip (such as an integrated circuit module including a single wafer), a hardware component, or a complete product.

It should be noted that the above units are only logical modules divided according to specific functions they implement, and are not used to limit specific implementations, for example, they can be implemented in software, hardware, or a combination of software and hardware. In practical implementations, each of the above units may be implemented as an independent physical entity, or may also be implemented by a single entity (for example, a processor (CPU or DSP, etc.), integrated circuit, etc.). In addition, each of the above units is shown with dashed lines in the drawings to indicate that these units may not actually exist, and the operations/functions they realized may be realized by the processing circuitry itself.

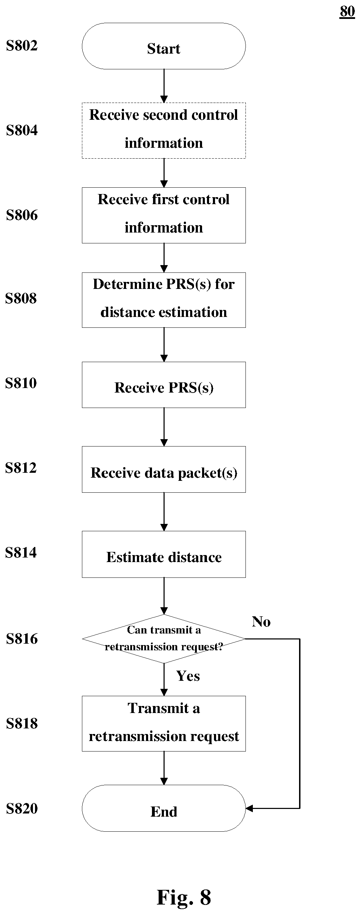

Next, a conceptual operation flow 80 of the electronic device 70 as a receiving end will be described with reference to FIG. 8.

The operation of the electronic device 70 as a receiving end starts with S802.

At S806, the electronic device 70 as a receiving end may receive first control information from a transmitting end device. As described in detail above, the first control information at least comprises information indicating a communication range threshold of the transmitting end device.

At S808, the electronic device 70 as a receiving end may determine one or more PRSs (i.e., PRS(s) for estimating positioning) transmitted by the transmitting end device based on the first control information. For example, the electronic device 70 may determine a time-frequency resource/a sequence of the PRS(s) for estimating positioning and a first time window based on the first control information.

At S810, the electronic device 70 as a receiving end may receive one or more PRSs from the transmitting end device. It should be noted that it is not necessary that all PRSs received by the electronic device 70 are used for estimating the distance. For example, the electronic device 70 may select one or more appropriate PRSs for estimating the distance according to the determined first time window.

At S812, the electronic device 70 as a receiving end may receive one or more data packets from the transmitting end device.

At S814, the electronic device 70 may estimate the distance between the electronic device 70 as a receiving end and the transmitting end device based on the PRS(s) for distance estimation determined at S808.

Next, at S816, the electronic device 70 may compare the communication range threshold indicated in the first control information received at S806 with the distance estimated at S814, and determine whether to transmit a retransmission request to the transmitting end device in response to failing to decode a data packet transmitted by the transmitting end device, based on the comparison result.

If the estimated distance is less than or equal to the communication range threshold and it failed to decode the data packet transmitted by the transmitting end device, the electronic device 70 may transmit a retransmission request to the transmitting end device, at S818. Otherwise, if the estimated distance is greater than the communication range threshold, the electronic device 70 does not transmit a retransmission request to the transmitting end device even if it failed to decode the data packet transmitted by the transmitting end device.

The conceptual operation flow of the electronic device 70 as a receiving end ends at S820.

It should be noted that the operation steps of the electronic device 70 as a receiving end shown in FIG. 8 are only illustrative. In practice, operations of a receiving end may also include some additional or alternative steps. For example, as shown in S804 in the dashed box, optionally, before receiving the first control information, the receiving end may also receive second control information from the transmitting end indicating a format of the first control information to be received next. In addition, the receiving end can also determine how long the determination made in S816 about whether a retransmission request can be transmitted can remain valid. In other words, the receiving end can also determine whether to enable a second time window, and in case of enabling, it can determine a position and/or length of the second time window. In particular, in a case that the second time window is enabled, the operation flow 80 may also include a step of determining whether the second time window has expired before receiving step S820, and in a case that it has not expired, for a newly received data packet(s), the receiving end may no longer determine PRSs for distance estimation and estimate the distance, but continue to use the previous estimated result.

In addition, the execution order of each operation shown in FIG. 8 is only illustrative. For example, the receiving end may receive PRSs at any appropriate moment, and may select one or more appropriate PRSs for calculating the distance according to the first time window. In addition, the receiving end may also receive data packet(s) at any time, not limited to after receiving the first control information and the PRS(s).

### Interactions between a transmitting end device and a receiving end device

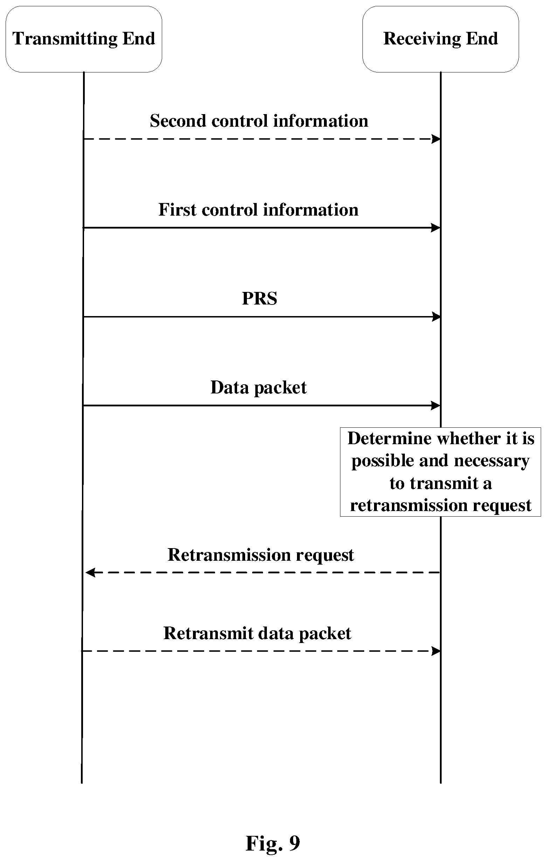

A schematic configuration and operation flow of a transmitting end device and a receiving end device according to the present disclosure have been described above with reference to the accompanying drawings. Next, interactions between a transmitting end device and a receiving end device according to the present disclosure will be described with reference to FIG. 9.

First, a transmitting end device may optionally transmit second control information indicating a format of first control information to be transmitted next to a receiving end device. Subsequently, the transmitting end device may transmit the first control information including information indicating a communication range threshold to the receiving end device, such that the receiving end device determines one or more PRSs for estimating a distance between the transmitting end and the receiving end, and further determines whether a retransmission request can be transmitted to the transmitting end device. Interactions between the transmitting end device and the receiving end device may also include transmitting PRS(s) and data packet(s) from the transmitting end device to the receiving end device. In the interaction flow shown in FIG. 9, the PRS is transmitted after the first control information, and the data packet is transmitted after the PRS. However, as explained above, orders in which the PRS and the data packet are transmitted are not limited to the orders shown in FIG. 9, and both the PRS and the data packet can be transmitted at any appropriate timing. Next, the receiving end device may determine whether a retransmission request can be transmitted to the transmitting end device in response to failing to decode a data packet, based on the received first control information. In addition, the receiving end device may also determine whether there is a data packet failing to be decoded, and transmit a retransmission request to the transmitting end device in the case that such a data packet exists and a retransmission request can be transmitted. In response to the retransmission request from the receiving end device, the transmitting end device may retransmit the data packet to the receiving end device.

The present disclosure has been described in detail above with reference to FIGS. 1-9. By means of the solution of the present disclosure, the distance between a transmitting end device and a receiving end device can be estimated more accurately, so that the receiving end device can more accurately determine whether a retransmission request can be transmitted to the transmitting end device. In this way, it is possible to avoid a receiving end device not within a reliable communication range from erroneously transmitting a retransmission request, resulting in resource occupation. In addition, it is also possible to avoid a receiving end device within a reliable communication range from missing to transmit a retransmission request, resulting in a decrease in reliability. In addition, in the solution of the present disclosure, only PRS(s) within a first time window can be used to estimate the distance, so that positioning inaccuracies caused by outdated PRSs may be avoided. Further, by setting a second time window, the present disclosure allows the validity of the determination of whether a retransmission request can be transmitted to be maintained for a period of time, therefore, it can avoid consuming resources due to excessive information interactions between the transmitting end device and the receiving end device, and can avoid excessively frequent occupation of computing resources of the receiving end device.

It should be understood that machine-executable instructions in a machine-readable storage medium or program product according to embodiments of the present disclosure can be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

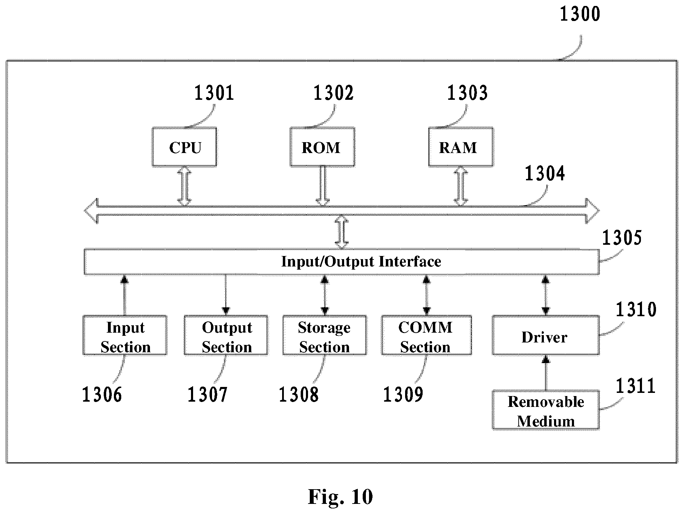

In addition, it should be understood that the series of processes and devices described above may also be implemented by software and/or firmware. In the case of be implemented by software and/or firmware, a program constituting the software is installed from a storage medium or a network to a computer having a dedicated hardware structure, for example, a general-purpose personal computer 1300 shown in FIG. 10, which, when installed with various programs, can perform various functions and the like. FIG. 10 is a block diagram showing an example structure of a personal computer as an information processing device that can be employed in an embodiment of the present disclosure. In one example, the personal computer may correspond to the above exemplary terminal device according to the present disclosure.

In FIG. 10, a central processing unit (CPU) 1301 executes various processes according to a program stored in a read only memory (ROM) 1302 or a program loaded from a storage section 1308 to a random-access memory (RAM) 1303. In the RAM 1303, data required when the CPU 1301 executes various processes and the like is also stored as necessary.

The CPU 1301, ROM 1302, and RAM 1303 are connected to each other via a bus 1304. The input/output interface 1305 is also connected to the bus 1304.

The following components are connected to the input/output interface 1305: an input section 1306 including a keyboard, a mouse, etc.; an output section 1307 including a display such as a cathode ray tube (CRT), a liquid crystal display (LCD), etc., and a speaker, etc.; a storage section 1308, including a hard disk, etc.; and a communication section 1309, including a network interface card such as a LAN card, a modem, and the like. The communication section 1309 performs communication processing via a network such as the Internet.

A driver 1310 is also connected to the input/output interface 1305 as needed. A removable medium 1311 such as a magnetic disk, an optical disk, a magneto-optical disk, a semiconductor memory, and the like is mounted on the drive 1310 as needed, so that a computer program read therefrom is installed into the storage section 1308 as needed.

In the case that the series of processing described above is implemented by software, a program constituting the software is installed from a network such as the Internet or a storage medium such as a removable medium 1311.

Those skilled in the art should understand that such a storage medium is not limited to the removable medium 1311 shown in FIG. 10 in which a program is stored and distributed separately from the device to provide the program to the user. Examples of the removable medium 1311 include a magnetic disk (including a floppy disk (registered trademark)), an optical disk (including a compact disk read-only memory (CD-ROM) and digital versatile disk (DVD)), a magneto-optical disk (including a mini disc (MD) (registered trademark)) and a semiconductor memory. Alternatively, the storage medium may be the ROM 1302, a hard disk contained in the storage section 1308, or the like, in which programs are stored and distributed to users together with devices containing them.

The techniques of the present disclosure can be applied to various products.

For example, the electronic device 30 and the electronic device 70 according to the embodiments of the present disclosure may be implemented as or included in various terminal devices/user devices, while the methods shown in FIGS. 6 and 8 may also be implemented by various terminal devices/user devices. In some cases, for example, the electronic device 30 according to embodiments of the present disclosure may be implemented as or included in various control devices/base stations, while the method shown in FIG. 6 may also be implemented by various control devices/base stations.

For example, the control device/base station mentioned in this disclosure can be implemented as any type of base station, e.g., an evolved Node B (gNB), such as a macro gNB and a small gNB. The small gNB may be a gNB covering a cell smaller than a macro cell, such as a pico gNB, a micro gNB, and a home (femto) gNB. Alternatively, the base station may be implemented as any other type of base station, such as a NodeB and a Base Transceiver Station (BTS). The base station may include: a body (also referred to as a base station device) configured to control wireless communication; and one or more Remote Radio Head (RRH) disposed at a different place from the body. In addition, various types of terminals to be described below can each operate as a base station by temporarily or semi-permanently performing base station functions.

For example, the terminal device mentioned in this disclosure, also referred to as a user device in some examples, can be implemented as a mobile terminal (such as a smart phone, a tablet personal computer (PC), a notebook PC, a portable game terminal, a portable/dongle type mobile router and a digital camera) or a vehicle-mounted terminal (such as a car navigation device). The user device may also be implemented as a terminal performing machine-to-machine (M2M) communication (also referred to as a machine type communication (MTC) terminal). In addition, the user device may be a wireless communication module (such as an integrated circuit module including a single wafer) mounted on each of the above terminals.

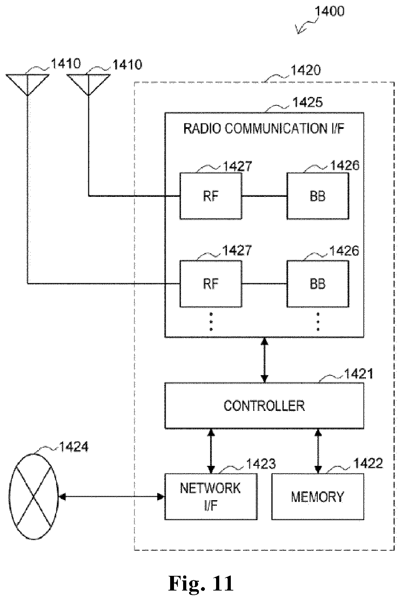

Examples according to the present disclosure will be described below with reference to FIGS. 11 to 14.

### [Examples about base stations]

It should be understood that the term base station in this disclosure has its full breadth of ordinary meaning and includes at least a wireless communication station used as part of a wireless communication system or a radio system to facilitate communication. Examples of base stations may be, for example but not limited to: a base station may be one or both of a base transceiver station (BTS) and a base station controller (BSC) in a GSM system, may be one or both of a radio network controller (RNC) and Node B in a WCDMA system, may be an eNB in a LTE and LTE-Advanced system, may be an gNB, eLTE eNB, etc. appearing in a 5G communication system, or may be a corresponding network node in a future communication system. Part of the functions in the base stations of the present disclosure may also be implemented as an entity that has control functions for communication in D2D, M2M and V2V communication scenarios, or as an entity that plays a spectrum coordination role in cognitive radio communication scenarios.

### First Example

FIG. 11 is a block diagram showing a first example of a schematic configuration of a gNB to which the technology of the present disclosure can be applied. The gNB 1400 includes multiple antennas 1410 and a base station device 1420. The base station device 1420 and each antenna 1410 may be connected to each other via an RF cable. In one implementation, the gNB 1400 (or the base station device 1420) here may correspond to the above electronic device 10 and/or the electronic device 80.

Each of the antennas 1410 includes a single or multiple antenna elements (such as multiple antenna elements included in a Multiple Input Multiple Output (MIMO) antenna), and is used by the base station device 1420 to transmit and receive wireless signals. As shown in FIG. 11, the gNB 1400 may include multiple antennas 1410. For example, the multiple antennas 1410 may be compatible with multiple frequency bands used by the gNB 1400.

The base station device 1420 includes a controller 1421, a memory 1422, a network interface 1423 and a wireless communication interface 1425.

The controller 1421 may be, for example, a CPU or a DSP, and operates various functions of a higher layer of the base station device 1420. For example, the controller 1421 generates a data packet according to data in a signal processed by the wireless communication interface 1425 and transfers the generated packet via the network interface 1423. The controller 1421 may bundle data from a plurality of baseband processors to generate a bundled packet, and transfer the generated bundled packet. The controller 1421 may have logic functions to perform controls such as radio resource control, radio bearer control, mobility management, admission control and scheduling. These controls can be performed in conjunction with nearby gNBs or core network nodes. The memory 1422 includes RAM and ROM, and stores programs executed by the controller 1421 and various types of control data (such as a terminal list, transmission power data, and scheduling data).

The network interface 1423 is a communication interface for connecting the base station device 1420 to the core network 1424. The controller 1421 may communicate with a core network node or a further gNB via the network interface 1423. In this case, the gNB 1400 and core network nodes or other gNBs can be connected to each other through logical interfaces (such as S1 interface and X2 interface). The network interface 1423 may also be a wired communication interface or a wireless communication interface for wireless backhaul. If the network interface 1423 is a wireless communication interface, the network interface 1423 may use a higher frequency band for wireless communication than that used by the wireless communication interface 1425.

The wireless communication interface 1425 supports any cellular communication scheme (such as Long-Term Evolution (LTE) and LTE-Advanced), and provides a wireless connection to a terminal located in a cell of the gNB 1400 via the antenna 1410. The wireless communication interface 1425 may generally include, for example, a baseband (BB) processor 1426 and an RF circuit 1427. The BB processor 1426 may perform, for example, encoding/decoding, modulation/demodulation, and multiplexing/demultiplexing, and performs various types of signal processing in layers (for example, L1, Medium Access Control (MAC), Radio Link Control (RLC), and Packet Data Convergence Protocol (PDCP)). In place of the controller 1421, the BB processor 1426 may have part or all of the logic functions described above. The BB processor 1426 may be a memory storing a communication control program, or a module including a processor and related circuits configured to execute the program. Updating the program may cause the functionality of the BB processor 1426 to change. The module may be a card or a blade inserted into a slot of the base station device 1420. Alternatively, the module can also be a chip mounted on a card or blade. Meanwhile, the RF circuit 1427 may include, for example, a mixer, a filter, and an amplifier, and transmit and receive wireless signals via the antenna 1410. Although FIG. 11 illustrates an example in which one RF circuit 1427 is connected to one antenna 1410, the present disclosure is not limited to this, instead, one RF circuit 1427 may be connected to multiple antennas 1410 at the same time.

As shown in FIG. 11, the wireless communication interface 1425 may include multiple BB processors 1426. For example, the multiple BB processors 1426 may be compatible with multiple frequency bands used by the gNB 1400. As shown in FIG. 11, the wireless communication interface 1425 may include multiple RF circuits 1427. For example, the multiple RF circuits 1427 may be compatible with multiple antenna elements. Although FIG. 11 illustrates an example in which the wireless communication interface 1425 includes multiple BB processors 1426 and multiple RF circuits 1427, the wireless communication interface 1425 may also include a single BB processor 1426 or a single RF circuit 1427.

### Second Example

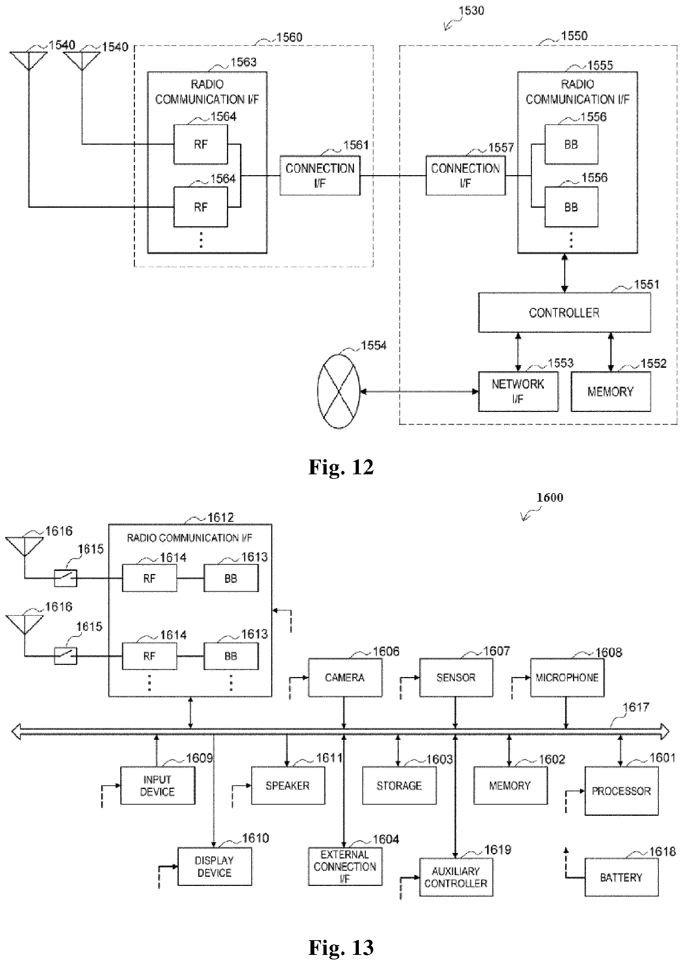

FIG. 12 is a block diagram showing a second example of a schematic configuration of a gNB to which the technology of the present disclosure can be applied. The gNB 1530 includes multiple antennas 1540, a base station device 1550 and a RRH 1560. The RRH 1560 and each antenna 1540 may be connected to each other via RF cables. The base station device 1550 and the RRH 1560 can be connected to each other via a high-speed line such as an optical fiber cable. In one implementation, the gNB 1530 (or the base station device 1550) here may correspond to the above electronic device 50 and/or 100.

Each of the antennas 1540 includes a single or multiple antenna elements (such as multiple antenna elements included in a MIMO antenna), and is used by the RRH 1560 to transmit and receive wireless signals. As shown in FIG. 12, the gNB 1530 may include multiple antennas 1540. For example, the multiple antennas 1540 may be compatible with multiple frequency bands used by the gNB 1530.

The base station device 1550 includes a controller 1551, a memory 1552, a network interface 1553, a wireless communication interface 1555 and a connection interface 1557. The controller 1551, the memory 1552, and the network interface 1553 are the same as the controller 1421, the memory 1422, and the network interface 1423 described with reference to FIG. 11.

The wireless communication interface 1555 supports any cellular communication scheme (such as LTE and LTE-Advanced), and provides wireless communication to terminals located in a sector corresponding to the RRH 1560 via the RRH 1560 and the antenna 1540. The wireless communication interface 1555 may generally include, for example, a BB processor 1556. The BB processor 1556 is the same as the BB processor 1426 described with reference to FIG. 11, except that the BB processor 1556 is connected to the RF circuit 1564 of the RRH 1560 via the connection interface 1557. As shown in FIG. 12, the wireless communication interface 1555 may include multiple BB processors 1556. For example, the multiple BB processors 1556 may be compatible with multiple frequency bands used by the gNB 1530. Although FIG. 12 illustrates an example in which the wireless communication interface 1555 includes multiple BB processors 1556, the wireless communication interface 1555 may also include a single BB processor 1556.

The connection interface 1557 is an interface for connecting the base station device 1550 (the wireless communication interface 1555) to the RRH 1560. The connection interface 1557 may also be a communication module for communication in the above high-speed line connecting the base station device 1550 (the wireless communication interface 1555) to the RRH 1560.

The RRH 1560 includes a connection interface 1561 and a wireless communication interface 1563.

The connection interface 1561 is an interface for connecting the RRH 1560 (the wireless communication interface 1563) to the base station device 1550. The connection interface 1561 may also be a communication module for communication in the above high-speed line.

The wireless communication interface 1563 transmits and receives wireless signals via the antenna 1540. The wireless communication interface 1563 may generally include an RF circuit 1564, for example. The RF circuit 1564 may include, for example, a mixer, a filter, and an amplifier, and transmits and receives wireless signals via the antenna 1540. Although FIG. 12 illustrates an example in which one RF circuit 1564 is connected to one antenna 1540, the present disclosure is not limited to this, instead, one RF circuit 1564 may be connected to multiple antennas 1540 at the same time.

As shown in FIG. 12, the wireless communication interface 1563 may include multiple RF circuits 1564. For example, the multiple RF circuits 1564 may support multiple antenna elements. Although FIG. 12 illustrates an example in which the wireless communication interface 1563 includes multiple RF circuits 1564, the wireless communication interface 1563 may also include a single RF circuit 2064.

### [Example about user device]

### First Example

FIG. 13 is a block diagram showing an example of a schematic configuration of a smart phone 1600 to which the technology of the present disclosure can be applied. The smart phone 1600 includes a processor 1601, a memory 1602, a storage apparatus 1603, an external connection interface 1604, a camera apparatus 1606, a sensor 1607, a microphone 1608, an input apparatus 1609, a display apparatus 1610, a speaker 1611, a wireless communication interface 1612, one or more antenna switches 1615, one or more antennas 1616, a bus 1617, a battery 1618, and an auxiliary controller 1619. In one implementation, the smart phone 1600 (or the processor 1601) here may correspond to the above electronic device 50 and/or electronic device 100.

The processor 1601 may be, for example, a CPU or a system on chip (SoC), and controls functions of an application layer and further layers of the smart phone 1600. The memory 1602 includes RAM and ROM, and stores data and programs executed by the processor 1601. The storage apparatus 1603 may include a storage medium such as a semiconductor memory and a hard disk. The external connection interface 1604 is an interface for connecting an external apparatus (such as a memory card and a universal serial bus (USB) apparatus) to the smart phone 1600.

The camera apparatus 1606 includes an image sensor (such as a charge coupled device (CCD) and a complementary metal oxide semiconductor (CMOS)), and generates captured images. The sensor 1607 may include a set of sensors, such as measurement sensor(s), gyro sensor(s), geomagnetic sensor(s), and acceleration sensor(s). The microphone 1608 converts sound input to the smart phone 1600 into an audio signal. The input apparatus 1609 includes, for example, a touch sensor configured to detect a touch on the screen of the display apparatus 1610, a keypad, a keyboard, a button, or a switch, and receives operations or information input from a user. The display apparatus 1610 includes a screen (such as a liquid crystal display (LCD) and an organic light emitting diode (OLED) display), and displays an output image of the smart phone 1600. The speaker 1611 converts an audio signal output from the smart phone 1600 into sound.

The wireless communication interface 1612 supports any cellular communication scheme (such as LTE and LTE-Advanced), and performs wireless communication. The wireless communication interface 1612 may generally include, for example, a BB processor 1613 and an RF circuit 1619. The BB processor 1613 can perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmit and receive wireless signals via the antenna 1616. The wireless communication interface 1612 may be a chip module on which a BB processor 1613 and an RF circuit 1614 are integrated. As shown in FIG. 13, the wireless communication interface 1612 may include multiple BB processors 1613 and multiple RF circuits 1614. Although FIG. 13 illustrates an example in which the wireless communication interface 1612 includes multiple BB processors 1613 and multiple RF circuits 1614, the wireless communication interface 1612 may include a single BB processor 1613 or a single RF circuit 1614.

Furthermore, the wireless communication interface 1612 may support other types of wireless communication scheme, such as a short-range wireless communication scheme, a near field communication scheme, and a wireless local area network (LAN) scheme, in addition to the cellular communication schemes. In this case, the wireless communication interface 1612 may include a BB processor 1613 and an RF circuit 1614 for each wireless communication scheme.

Each of the antenna switches 1615 switches the connection destination of the antenna 1616 among a plurality of circuits (e.g., circuits for different wireless communication schemes) included in the wireless communication interface 1612.

Each of the antennas 1616 includes a single or multiple antenna elements (such as multiple antenna elements included in a MIMO antenna), and is used for the wireless communication interface 1612 to transmit and receive wireless signals. As shown in FIG. 13, the smart phone 1600 may include multiple antennas 1616. Although FIG. 13 shows an example in which the smart phone 1600 includes multiple antennas 1616, the smart phone 1600 may also include a single antenna 1616.

In addition, the smart phone 1600 may include an antenna 1616 for each wireless communication scheme. In this case, the antenna switch 1615 may be omitted from the configuration of the smart phone 1600.

The bus 1617 connects the processor 1601, the memory 1602, the storage apparatus 1603, the external connection interface 1604, the camera apparatus 1606, the sensor 1607, the microphone 1608, the input apparatus 1609, the display apparatus 1610, the speaker 1611, the wireless communication interface 1612, and the auxiliary controller 1619 to each other. The battery 1618 provides power to the various blocks of the smart phone 1600 shown in FIG. 13 via feed lines, which are partially shown as dashed lines in the figure. The auxiliary controller 1619 operates minimum necessary functions of the smart phone 1600, for example, in a sleep mode.

### Second Example

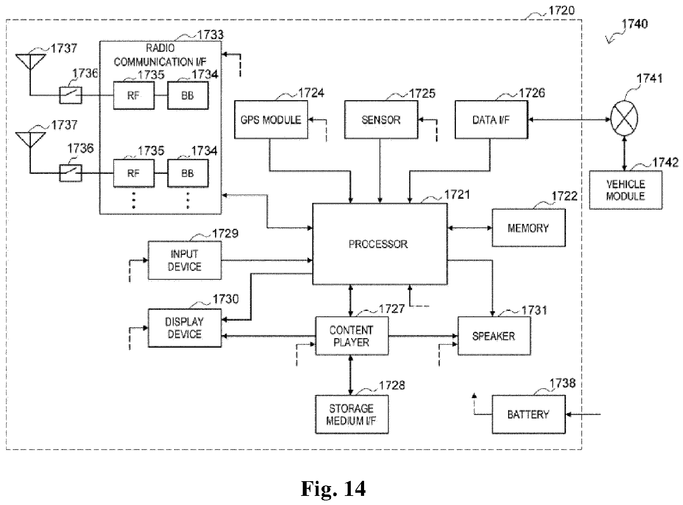

FIG. 14 is a block diagram showing an example of a schematic configuration of a car navigation device 1720 to which the technology of the present disclosure can be applied. The car navigation device 1720 includes a processor 1721, a memory 1722, a global positioning system (GPS) module 1724, a sensor 1725, a data interface 1726, a content player 1727, a storage medium interface 1728, an input apparatus 1729, a display apparatus 1730, a speaker 1731, a wireless communication interface 1733, one or more antenna switches 1736, one or more antennas 1737, and a battery 1738. In one implementation, the car navigation device 1720 (or the processor 1721) here may correspond to the above electronic device 50 and/or electronic device 100.

The processor 1721 may be, for example, a CPU or a SoC, and controls a navigation function and other functions of the car navigation device 1720. The memory 1722 includes RAM and ROM, and stores data and programs executed by the processor 1721.

The GPS module 1724 measures the location (such as latitude, longitude, and altitude) of the car navigation device 1720 using GPS signals received from GPS satellites. The sensor 1725 may include a set of sensors such as gyro sensor (s), geomagnetic sensor(s), and air pressure sensor(s). The data interface 1726 is connected to, for example, an in-vehicle network 1741 via a terminal not shown, and acquires data (such as vehicle speed data) generated by the vehicle.

The content player 1727 reproduces content stored in storage medium (such as a CD and a DVD), which is inserted into the storage medium interface 1728. The input apparatus 1729 includes, for example, a touch sensor configured to detect a touch on the screen of the display apparatus 1730, a button, or a switch, and receives operations or information input from a user. The display apparatus 1730 includes a screen such as an LCD or OLED display, and displays an image of a navigation function or reproduced content. The speaker 1731 outputs sound of the navigation function or reproduced content.

The wireless communication interface 1733 supports any cellular communication scheme (such as LTE and LTE-Advanced), and performs wireless communication. The wireless communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The wireless communication interface 1733 can also be a chip module on which the BB processor 1734 and the RF circuit 1735 are integrated. As shown in FIG. 14, the wireless communication interface 1733 may include multiple BB processors 1734 and multiple RF circuits 1735. Although FIG. 14 illustrates an example in which the wireless communication interface 1733 includes multiple BB processors 1734 and multiple RF circuits 1735, the wireless communication interface 1733 may also include a single BB processor 1734 or a single RF circuit 1735.

Furthermore, the wireless communication interface 1733 may support other types of wireless communication scheme, such as a short-range wireless communication scheme, a near field communication scheme, and a wireless LAN scheme, in addition to the cellular communication schemes. In this case, the wireless communication interface 1733 may include the BB processor 1734 and the RF circuit 1735 for each wireless communication scheme.

Each of the antenna switches 1736 switches the connection destination of the antenna 1737 among a plurality of circuits (such as circuits for different wireless communication schemes) included in the wireless communication interface 1733.

Each of the antennas 1737 includes a single or multiple antenna elements (such as multiple antenna elements included in a MIMO antenna), and is used for the wireless communication interface 1733 to transmit and receive wireless signals. As shown in FIG. 14, the car navigation device 1720 may include multiple antennas 1737. Although FIG. 14 illustrates an example in which the car navigation device 1720 includes multiple antennas 1737, the car navigation device 1720 may also include a single antenna 1737.

Furthermore, the car navigation device 1720 may include an antenna 1737 for each wireless communication scheme. In this case, the antenna switch 1736 can be omitted from the configuration of the car navigation device 1720.

The battery 1738 provides power to various blocks of the car navigation device 1720 shown in FIG. 14 via feeder lines, which are partially shown as dashed lines in the figure. The battery 1738 accumulates electric power supplied from the vehicle.

The technology of the present disclosure may also be implemented as an in-vehicle system (or vehicle) 1740 including one or more blocks of the car navigation device 1720, the in-vehicle network 1741, and the vehicle module 1742. The vehicle module 1742 generates vehicle data (such as vehicle speed, engine speed, and fault information), and outputs the generated data to the in-vehicle network 1741.

The exemplary embodiments of the present disclosure have been described above with reference to the accompanying drawings, but the present disclosure is of course not limited to the above examples. Those skilled in the art may find various alterations and modifications within the scope of the appended claims, and it should be understood that these alterations and modifications will naturally fall within the technical scope of the present disclosure.

It should be understood that machine-executable instructions in a machine-readable storage medium or program product according to embodiments of the present disclosure can be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of be implemented by software and/or firmware, corresponding programs constituting corresponding software are stored in a storage medium of a relevant device (for example, in the memory 304 or 704 of the electronic device 30 shown in FIG. 3 or the electronic device 70 shown in FIG. 7), which, when executed, can performing various functions.

For example, a plurality of functions included in one unit in the above embodiments may be implemented by separate apparatus. Alternatively, the plurality of functions implemented by multiple units in the above embodiments may be implemented by separate apparatuses, respectively. Additionally, one of the above functions may be implemented by multiple units. Needless to say, such a configuration is included in the technical scope of the present disclosure.

In this specification, the steps described in the flowchart include not only processes performed in time sequence in the stated order, but also processes performed in parallel or individually rather than necessarily in time sequence. Furthermore, even in the steps processed in time sequence, needless to say, the order can be appropriately changed.

Although the present disclosure and its advantages have been described in detail, it should be understood that various changes, substitutions and alterations can be made herein without departing from the spirit and scope of the disclosure as defined by the appended claims. Furthermore, the terms "comprise", "include" or any other variation thereof in embodiments of the present disclosure are intended to encompass a non-exclusive inclusion, such that a process, a method, an article or a device comprising a series of elements includes not only those elements, but also includes other elements not expressly listed, or includes elements inherent to such a process, a method, an article or a device. Without further limitation, an element defined by the phrase "comprising one..." does not preclude the presence of additional identical elements in a process, a method, an article or a device that includes the element.

In addition, the present disclosure may also have the following configurations:
(1) An electronic device for a wireless communication system, comprising:
   a processing circuitry configured to:
   transmit first control information to one or more second electronic devices, wherein the first control information at least comprises information indicating a communication range threshold of the electronic device and is used for determining one or more Positioning Reference Signals (PRS), wherein the one or more PRSs are transmitted by the electronic device and are used by the second electronic device to estimate a distance between the electronic device and the second electronic device,
   wherein, the second electronic device is able to determine whether to transmit a retransmission request to the electronic device in response to failing to decode a data packet transmitted by the electronic device, according to a comparison between the communication range threshold and the estimated distance.
(2) The electronic device of (1), wherein
   the first control information further comprises information for determining a time-frequency resource and/or a sequence of the one or more PRSs.
(3) The electronic device of (1) or (2), wherein
   the first control information is further used for determining a first time window, wherein only one or more positioning reference signals within the first time window can be determined as said one or more PRSs.
(4) The electronic device of (3), wherein
   the first time window comprises a subframe where the first control information is located and /or one or more subframes before the first control information and/or one or more subframes after the first control information.
(5) The electronic device of (3), wherein
   a starting position of the first time window is determined by a subframe number of the subframe where the first control information is located; and
   a length of the first time window is determined by one of the following manners: indicated by the first control information, indicated by a base station via a Radio Resource Control (RRC) signaling, or specified in advance.
(6) The electronic device of (1) or (2), wherein, the first control information does not comprise information indicating a zone identifier (zone ID).
(7) The electronic device of (1) or (2), wherein, the processing circuitry is further configured to dynamically determine the communication range threshold.
(8) The electronic device of (7), wherein, the communication range threshold is dynamically determined based on one or more of:
   a moving speed of the electronic device,
   a number of the second electronic device, and
   a quantity of time-frequency resources available for transmitting the retransmission request by the second electronic device.
(9) The electronic device of (1) or (2), wherein, the first control information further indicates to enable a second time window, such that the second electronic device determines whether to transmit, in response to failing to decode one or more data packets transmitted within the second time window by the electronic device, one or more corresponding retransmission requests to the electronic device, according to the comparison between the communication range threshold and the estimated distance.
(10) The electronic device of (9), wherein,
   a position and/or length of the second time window is determined based on the first time window, or
   the position and/or length of the second time window is indicated by the first control information, or
   the position and/or length of the second time window is specified in advance.
(11) The electronic device of (1), wherein, the processing circuitry is further configured to transmit second control information to the one or more second electronic devices before transmitting the first control information, wherein the second control information is used for indicating a format of the first control information.
(12) The electronic device of (1) or (11), wherein, the first control information and the second control information are Sidelink Control Information (SCI).
(13) A method performed by an electronic device for a wireless communication system, comprising:
   transmitting first control information to one or more second electronic devices, wherein the first control information at least comprises information indicating a communication range threshold of the electronic device and is used for determining one or more Positioning Reference Signals (PRS), wherein the one or more PRSs are transmitted by the electronic device and are used by the second electronic device to estimate a distance between the electronic device and the second electronic device,
   wherein, the second electronic device is able to determine whether to transmit a retransmission request to the electronic device in response to failing to decode a data packet transmitted by the electronic device, according to a comparison between the communication range threshold and the estimated distance.
(14) An electronic device for a wireless communication system, comprising:
   a processing circuitry configured to:
   receive first control information from a first electronic device, wherein the first control information at least comprises information indicating a communication range threshold of the first electronic device,
   determine one or more positioning reference signals transmitted by the first electronic device based on the first control information,
   estimate a distance between the first electronic device and the electronic device based on the one or more PRSs, and
   compare the communication range threshold with the estimated distance, and determine whether to transmit a retransmission request to the first electronic device in response to failing to decode a data packet transmitted by the first electronic device, based on the comparison result.
(15) The electronic device of (14), wherein
   the first control information further comprises information for determining a time-frequency resource and/or a sequence of the one or more PRSs.
(16) The electronic device of (14) or (15), wherein
   the first control information is further used for determining a first time window, wherein only one or more positioning reference signals within the first time window can be determined as said one or more PRSs.
(17) The electronic device of (16), wherein
   the first time window comprises a subframe where the first control information is located and /or one or more subframes before the first control information and/or one or more subframes after the first control information.
(18) The electronic device of (16), wherein
   a starting position of the first time window is determined by a subframe number of the subframe where the first control information is located; and
   a length of the first time window is determined by one of the following manners: indicated by the first control information, indicated by a base station via a Radio Resource Control (RRC) signaling, or specified in advance.
(19) The electronic device of (14) or (15), wherein, the first control information does not comprise information indicating a zone identifier (zone ID).
(20) The electronic device of (14) or (15), wherein, the communication range threshold is dynamically determined by the first electronic device based on one or more of:
   a moving speed of the electronic device,
   a number of the second electronic device, and
   a quantity of time-frequency resources available for transmitting the retransmission request by the second electronic device.
(21) The electronic device of (14) or (15), wherein, the first control information further indicates to enable a second time window, wherein,
   the processing circuitry is further configured to determine whether to transmit, in response to failing to decode one or more data packets transmitted within the second time window by the first electronic device, one or more corresponding retransmission requests to the first electronic device, according to the comparison between the communication range threshold and the estimated distance.
(22) The electronic device of (21), wherein,
   a position and/or length of the second time window is determined based on the first time window, or
   the position and/or length of the second time window is indicated by the first control information, or
   the position and/or length of the second time window is specified in advance.
(23) The electronic device of (14), wherein, the processing circuitry is further configured to receive second control information from the first electronic device before receiving the first control information, wherein the second control information is used for indicating a format of the first control information.
(24) The electronic device of (14) or (23), wherein, the first control information and the second control information are Sidelink Control Information (SCI).
(25) The electronic device of (14) or (15), wherein, the processing circuitry is further configured to:
   in response to the estimated distance being less than or equal to the communication range threshold, determine to transmit a retransmission request to the first electronic device in response to failing to decode a data packet transmitted by the first electronic device, and
   in response to the estimated distance being greater than the communication range threshold, determine not to transmit a retransmission request to the first electronic device in a case of failing to decode a data packet transmitted by the first electronic device.
(26) A method performed by an electronic device for a wireless communication system, comprising:
   receiving first control information from a first electronic device, wherein the first control information at least comprises information indicating a communication range threshold of the first electronic device,
   determining one or more positioning reference signals transmitted by the first electronic device based on the first control information,
   estimating a distance between the first electronic device and the electronic device based on the one or more PRSs, and
   comparing the communication range threshold with the estimated distance, and determining whether to transmit a retransmission request to the first electronic device in response to failing to decode a data packet transmitted by the first electronic device, based on the comparison result.
(27) A non-transitory computer-readable storage medium having executable instructions stored thereon, which, when executed, implement the method of (13) or (26).
(28) A device comprising:
   a processor,
   a storage apparatus having executable instructions stored thereon, which, when executed, implement the method of (13) or (26) .

## Claims

1. An electronic device for a wireless communication system, comprising:
a processing circuitry configured to:
transmit first control information to one or more second electronic devices, wherein the first control information at least comprises information indicating a communication range threshold of the electronic device and is used for determining one or more Positioning Reference Signals (PRS), wherein the one or more PRSs are transmitted by the electronic device and are used by the second electronic device to estimate a distance between the electronic device and the second electronic device,
wherein, the second electronic device is able to determine whether to transmit a retransmission request to the electronic device in response to failing to decode a data packet transmitted by the electronic device, according to a comparison between the communication range threshold and the estimated distance.

2. The electronic device of claim 1, wherein
the first control information further comprises information for determining a time-frequency resource and/or a sequence of the one or more PRSs.

3. The electronic device of claim 1 or 2, wherein
the first control information is further used for determining a first time window, wherein only one or more positioning reference signals within the first time window can be determined as said one or more PRSs.

4. The electronic device of claim 3, wherein
the first time window comprises a subframe where the first control information is located and /or one or more subframes before the first control information and/or one or more subframes after the first control information.

5. The electronic device of claim 3, wherein
a starting position of the first time window is determined by a subframe number of the subframe where the first control information is located; and
a length of the first time window is determined by one of the following manners: indicated by the first control information, indicated by a base station via a Radio Resource Control (RRC) signaling, or specified in advance.

6. The electronic device of claim 1 or 2, wherein, the first control information does not comprise information indicating a zone identifier (zone ID).

7. The electronic device of claim 1 or 2, wherein, the processing circuitry is further configured to dynamically determine the communication range threshold.

8. The electronic device of claim 7, wherein, the communication range threshold is dynamically determined based on one or more of:
a moving speed of the electronic device,
a number of the second electronic device, and
a quantity of time-frequency resources available for transmitting the retransmission request by the second electronic device.

9. The electronic device of claim 1 or 2, wherein, the first control information further indicates to enable a second time window, such that the second electronic device determines whether to transmit, in response to failing to decode one or more data packets transmitted within the second time window by the electronic device, one or more corresponding retransmission requests to the electronic device, according to the comparison between the communication range threshold and the estimated distance.

10. The electronic device of claim 9, wherein,
a position and/or length of the second time window is determined based on the first time window, or
the position and/or length of the second time window is indicated by the first control information, or
the position and/or length of the second time window is specified in advance.

11. The electronic device of claim 1, wherein, the processing circuitry is further configured to transmit second control information to the one or more second electronic devices before transmitting the first control information, wherein the second control information is used for indicating a format of the first control information.

12. The electronic device of claim 1 or 11, wherein, the first control information and the second control information are Sidelink Control Information (SCI).

13. A method performed by an electronic device for a wireless communication system, comprising:
transmitting first control information to one or more second electronic devices, wherein the first control information at least comprises information indicating a communication range threshold of the electronic device and is used for determining one or more Positioning Reference Signals (PRS), wherein the one or more PRSs are transmitted by the electronic device and are used by the second electronic device to estimate a distance between the electronic device and the second electronic device,
wherein, the second electronic device is able to determine whether to transmit a retransmission request to the electronic device in response to failing to decode a data packet transmitted by the electronic device, according to a comparison between the communication range threshold and the estimated distance.

14. An electronic device for a wireless communication system, comprising:
a processing circuitry configured to:
receive first control information from a first electronic device, wherein the first control information at least comprises information indicating a communication range threshold of the first electronic device,
determine one or more positioning reference signals transmitted by the first electronic device based on the first control information,
estimate a distance between the first electronic device and the electronic device based on the one or more PRSs, and
compare the communication range threshold with the estimated distance, and determine whether to transmit a retransmission request to the first electronic device in response to failing to decode a data packet transmitted by the first electronic device, based on the comparison result.

15. The electronic device of claim 14, wherein
the first control information further comprises information for determining a time-frequency resource and/or a sequence of the one or more PRSs.

16. The electronic device of claim 14 or 15, wherein
the first control information is further used for determining a first time window, wherein only one or more positioning reference signals within the first time window can be determined as said one or more PRSs.

17. The electronic device of claim 16, wherein
the first time window comprises a subframe where the first control information is located and /or one or more subframes before the first control information and/or one or more subframes after the first control information.

18. The electronic device of claim 16, wherein
a starting position of the first time window is determined by a subframe number of the subframe where the first control information is located; and
a length of the first time window is determined by one of the following manners: indicated by the first control information, indicated by a base station via a Radio Resource Control (RRC) signaling, or specified in advance.

19. The electronic device of claim 14 or 15, wherein, the first control information does not comprise information indicating a zone identifier (zone ID).

20. The electronic device of claim 14 or 15, wherein, the communication range threshold is dynamically determined by the first electronic device based on one or more of:
a moving speed of the electronic device,
a number of the second electronic device, and
a quantity of time-frequency resources available for transmitting the retransmission request by the second electronic device.

21. The electronic device of claim 14 or 15, wherein, the first control information further indicates to enable a second time window, wherein,
the processing circuitry is further configured to determine whether to transmit, in response to failing to decode one or more data packets transmitted within the second time window by the first electronic device, one or more corresponding retransmission requests to the first electronic device, according to the comparison between the communication range threshold and the estimated distance.

22. The electronic device of claim 21, wherein
a position and/or length of the second time window is determined based on the first time window, or
the position and/or length of the second time window is indicated by the first control information, or
the position and/or length of the second time window is specified in advance.

23. The electronic device of claim 14, wherein, the processing circuitry is further configured to receive second control information from the first electronic device before receiving the first control information, wherein the second control information is used for indicating a format of the first control information.

24. The electronic device of claim 14 or 23, wherein, the first control information and the second control information are Sidelink Control Information (SCI).

25. The electronic device of claim 14 or 15, wherein, the processing circuitry is further configured to:
in response to the estimated distance being less than or equal to the communication range threshold, determine to transmit a retransmission request to the first electronic device in response to failing to decode a data packet transmitted by the first electronic device, and
in response to the estimated distance being greater than the communication range threshold, determine not to transmit a retransmission request to the first electronic device in a case of failing to decode a data packet transmitted by the first electronic device.

26. A method performed by an electronic device for a wireless communication system, comprising:
receiving first control information from a first electronic device, wherein the first control information at least comprises information indicating a communication range threshold of the first electronic device,
determining one or more positioning reference signals transmitted by the first electronic device based on the first control information,
estimating a distance between the first electronic device and the electronic device based on the one or more PRSs, and
comparing the communication range threshold with the estimated distance, and determining whether to transmit a retransmission request to the first electronic device in response to failing to decode a data packet transmitted by the first electronic device, based on the comparison result.

27. A non-transitory computer-readable storage medium having executable instructions stored thereon, which, when executed, implement the method of claim 13 or 26.

28. A device comprising:
a processor,
a storage apparatus having executable instructions stored thereon, which, when executed, implement the method of claim 13 or 26.
